# EUROPEAN PATENT APPLICATION

(11) **EP 4 553 351 A1**
(43) Date of publication of application: **14.05.2025**
(21) Application number: 24782426.1
(22) Date of filing: 13.06.2024
(51) Int. Cl.: F16K 11/08

(54) **FLOW PATH SWITCHING VALVE AND REFRIGERATION CYCLE DEVICE**

(30) Priority: 12.09.2023 JP 2023147739
(71) Applicant: Daikin Industries, Ltd., Osaka-shi, Osaka 530-0001 (JP)
(72) Inventor: HAMADATE, Junichi, Osaka 5300001 (JP); KOIKE, Fumiaki, Osaka 5300001 (JP); ISHIYAMA, Taichi, Osaka 5300001 (JP); OKUNO, Masato, Osaka 5300001 (JP)
(74) Representative: Hoffmann Eitle
(86) International application number: PCT/JP2024/021473
(87) International publication number: WO 2025/057512

(57) **Abstract**

A flow path switching valve (18) includes a container (31) having a hollow portion (31A) inside, and a valve body (60) that is rotatably housed in the hollow portion (31A) and is switched between a first orientation and a second orientation by being rotationally operated, in which the container (31) is provided with a first opening (P1), a second opening (P2), and a third opening (P3) that communicate the hollow portion (31A) with an outside of the container (31), and the valve body (60) is provided with a through hole (61) that connects the first opening (P1) and the second opening (P2) in the first orientation, connects the first opening (P1) and the third opening (P3) in the second orientation, and through which a low-pressure refrigerant sucked into a compressor (15) of a refrigerant circuit flows, and a concave portion (62) that communicates with the third opening (P3) in the first orientation, communicates with the second opening (P2) in the second orientation, and has a shape in which an outer surface of the valve body (60) is recessed.

## Description

### TECHNICAL FIELD

The present disclosure relates to a flow path switching valve and a refrigeration cycle apparatus.

### BACKGROUND ART

Patent Literature 1 discloses an air conditioner that switches between cooling and heating. The air conditioner includes a flow path switching valve that causes a refrigerant discharged from a compressor to flow while switching the refrigerant between an outdoor heat exchanger and an indoor heat exchanger. The flow path switching valve of Patent Literature 1 includes a switching valve body that functions as a housing and a valve body rotatably housed in the switching valve body. A first connection port to which a discharge-side pipe of the compressor is connected, a second connection port to which an inlet-side pipe of the indoor heat exchanger is connected, a third connection port to which an outlet-side pipe of the indoor heat exchanger is connected, a fourth connection port to which an intake-side pipe of the compressor is connected, a fifth connection port to which an outlet-side pipe of the outdoor heat exchanger is connected, and a sixth connection port to which an inlet-side pipe of the outdoor heat exchanger is connected are formed in the switching valve body. The valve body is provided with a plurality of communication paths that communicates the first connection port with the sixth connection port, communicates the third connection port with the fourth connection port, and communicates the second connection port with the fifth connection port via a throttle path during a cooling operation, and communicates the first connection port with the second connection port, communicates the fourth connection port with the fifth connection port, and communicates the third connection port with the sixth connection port via a throttle path during a heating operation.

### CITATION LIST

### [PATENT LITERATURE]

PATENT LITERATURE 1: Japanese Laid-Open Patent Publication No. 2011-202738

### SUMMARY OF THE INVENTION

### [TECHNICAL PROBLEM]

A low-pressure refrigerant suckedintaken into the compressor has a density lower than a density of a high-pressure refrigerant discharged from the compressor. Therefore, the low-pressure refrigerant flowing through the flow path switching valve is more likely to generate a pressure loss than the high-pressure refrigerant. In the flow path switching valve described in Patent Literature 1, such a pressure loss of the low-pressure refrigerant is not considered at all. An object of the present disclosure is to reduce a pressure loss of a low-pressure refrigerant flowing through a flow path switching valve.

### [SOLUTION TO PROBLEM]

(1) A flow path switching valve of the present disclosure includes:
   a container having a hollow portion inside; and
   a valve body that is rotatably housed in the hollow portion and is switched between a first orientation and a second orientation by being rotationally operated,
   in which the container is provided with a first opening, a second opening, and a third opening that communicate the hollow portion with an outside of the container, and
   the valve body is provided with
      a through hole that connects the first opening and the second opening in the first orientation, connects the first opening and the third opening in the second orientation, and through which a low-pressure refrigerant sucked into a compressor of a refrigerant circuit flows, and
      a concave portion that communicates with the third opening in the first orientation, communicates with the second opening in the second orientation, and has a shape in which an outer surface of the valve body is recessed.

In the above configuration, instead of the plurality of through holes, the through hole and the concave portion are formed in the valve body, and thus, a capacity of the through hole occupying the entire valve body can be further increased, and a sectional area of the refrigerant flow path due to the through hole can be further increased. Therefore, a pressure loss of a low-pressure refrigerant flowing through the through hole can be reduced.

(2) In the flow path switching valve according to (1),
the container is provided with a fourth opening that communicates the hollow portion and the outside of the container, and
the concave portion connects the third opening and the fourth opening in the first orientation and connects the second opening and the fourth opening in the second orientation, and a high-pressure refrigerant discharged from the compressor flows through the concave portion.

**In** the above configuration, a high-pressure refrigerant can flow by utilizing the concave portion, and the flow path switching valve can be used as a four-way switching valve.

(3) **In** the flow path switching valve according to (1) or (2), a capacity of the through hole is 28% or more and 69% or less of a volume of the valve body.

**In** the above configuration, the sectional area of the through hole through which the low-pressure refrigerant flows can be further increased, and the pressure loss can be reduced.

(4) The flow path switching valve according to (2) further includes a leakage portion that leaks the high-pressure refrigerant flowing in from the fourth opening to the hollow portion.

**In** the above configuration, the pressure of the leaking high-pressure refrigerant can be substantially uniformly applied to the entire outer surface of the valve body, and a load torque for rotating the valve body can be reduced.

(5) **In** the flow path switching valve according to any one of (1) to (4),
on the outer surface of the valve body, one end of the through hole is opened on a first axial center that is an axial center of the valve body, and another end of the through hole is opened on a second axial center orthogonal to the first axial center, and
on the outer surface of the valve body, the concave portion is provided in a range extending between a first position disposed on a third axial center orthogonal to the first axial center and the second axial center and a second position disposed on an opposite side of the first position on the third axial center.

In the above configuration, the flow path through which the low-pressure refrigerant and the high-pressure refrigerant flow can be formed by the through hole and the concave portion.

(6) In the flow path switching valve according to any one of (1) to (4),
on the outer surface of the valve body, one end of the through hole is opened on a first axial center orthogonal to an axial center of the valve body, and another end of the through hole is opened on a second axial center orthogonal to the axial center and the first axial center, and
on the outer surface of the valve body, the concave portion is provided in a range from a first position disposed on an opposite side of the one end of the through hole on the first axial center to a second position disposed on an opposite side of the another end of the through hole on the second axial center.

In the above configuration, the flow path through which the low-pressure refrigerant and the high-pressure refrigerant flow can be formed by the through hole and the concave portion.

(7) A refrigeration cycle apparatus of the present disclosure includes the flow path switching valve according to any one of (1) to (6).

### BRIEF DESCRIPTION OF DRAWINGS

FIG. 1 is a schematic diagram of a refrigerant circuit of a refrigeration cycle apparatus including a flow path switching valve according to a first embodiment of the present disclosure.
FIG. 2A is a perspective view of the flow path switching valve.
FIG. 2B is a sectional view of the flow path switching valve.
FIG. 3 is a perspective view of a valve body of the flow path switching valve.
FIG. 4 is a front view of the valve body of the flow path switching valve.
FIG. 5 is a side view of the valve body of the flow path switching valve.
FIG. 6 is a rear view of the valve body of the flow path switching valve.
FIG. 7 is a sectional view taken along line A-A in FIG. 4.
FIG. 8 is a sectional view taken along line B-B in FIG. 4.
FIG. 9A is a diagram for describing an action of the flow path switching valve.
FIG. 9B is a diagram for describing an action of the flow path switching valve.
FIG. 10 is a schematic graph showing a relationship between an outer diameter of a valve body of the flow path switching valve and a sectional area of a flow path of a low-pressure refrigerant that can be formed in the valve body.
FIG. 11 is a perspective view of a flow path switching valve according to a second embodiment of the present disclosure.
FIG. 12 is a perspective view of a valve body of the flow path switching valve.
FIG. 13 is a perspective view of the valve body of the flow path switching valve.
FIG. 14A is a diagram for describing an action of the flow path switching valve.
FIG. 14B is a diagram for describing an action of the flow path switching valve.

### DETAILED DESCRIPTION

Embodiments of the present disclosure will be described in detail hereinafter with reference to the accompanying drawings.

### [First embodiment]

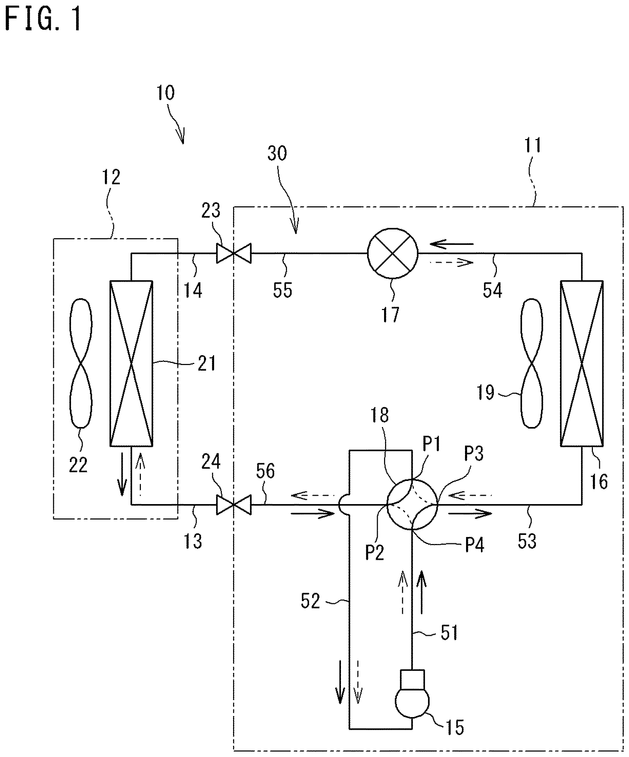

FIG. 1 is a schematic diagram of a refrigerant circuit of a refrigeration cycle apparatus including a flow path switching valve according to a first embodiment of the present disclosure.

A refrigeration cycle apparatus 10 includes a refrigerant circuit 30 that executes vapor compression refrigeration cycle operation. The refrigeration cycle apparatus 10 according to the present embodiment is an air conditioner. As shown in FIG. 1, an air conditioner 10 includes an outdoor unit (heat source unit) 11 and an indoor unit (utilization unit) 12. The outdoor unit 11 and the indoor unit 12 are connected by connection pipes 13 and 14, respectively. The outdoor unit 11, the indoor unit 12, and the connection pipes 13 and 14 form the refrigerant circuit 30. The refrigeration cycle apparatus 10 is not limited to an air conditioner but may be a refrigerator, a freezer, a hot-water supplier, or the like.

### (Configuration of refrigerant circuit)

As shown in FIG. 1, the outdoor unit 11 is provided with a compressor 15, an outdoor heat exchanger (heat-source heat exchanger; second heat exchanger) 16, an expansion valve 17, and a four-way switching valve (flow path switching valve) 18 constituting the refrigerant circuit 30. The outdoor unit 11 is also provided with an outdoor fan 19. The indoor unit 12 is provided with an indoor heat exchanger (utilization heat exchanger: first heat exchanger) 21 constituting the refrigerant circuit 30. The indoor unit 12 is also provided with an indoor fan 22.

The compressor 15 is, for example, a positive displacement compressor such as a scroll type or a rotary type, and incorporates a compressor motor. The compressor 15 compresses a low-pressure refrigerant sucked from an intake pipe 52 and then discharges the compressed refrigerant from a discharge pipe 51. In the outdoor unit 11, a discharge side of the compressor 15 is connected to a fourth port (fourth opening) P4 of the four-way switching valve 18 via the discharge pipe 51. An intake side of the compressor 15 is connected to a first port P1 of the four-way switching valve 18 via the intake pipe 52.

The outdoor heat exchanger 16 includes a cross-fin type fin-and-tube heat exchanger, a microchannel heat exchanger, or the like. A gas-side end of the outdoor heat exchanger 16 is connected to a third port P3 of the four-way switching valve 18 via a refrigerant pipe 53. A liquid-side end of the outdoor heat exchanger 16 is connected to one end of the expansion valve 17 via a refrigerant pipe 54.

The expansion valve 17 is, for example, an electric valve whose opening degree is adjustable. The other end of the expansion valve 17 is connected to a liquid-side shutoff valve 23 via a refrigerant pipe 55.

The indoor heat exchanger 21 includes a cross-fin type fin-and-tube heat exchanger, a microchannel heat exchanger, or the like. A liquid-side end of the indoor heat exchanger 21 is connected to the liquid-side shutoff valve 23 via the liquid-side connection pipe 14. A gas-side end of the indoor heat exchanger 21 is connected to a gas-side shutoff valve 24 via the gas-side connection pipe 13. The gas-side shutoff valve 24 is connected to a second port P2 of the four-way switching valve 18 via a refrigerant pipe 56.

The four-way switching valve 18 switches a flow path between a first mode (mode indicated by a solid line in FIG. 1) in which the first port P1 and the second port P2 communicate with each other and the third port P3 and the fourth port P4 communicate with each other and a second mode (mode indicated by a dotted line in FIG. 1) in which the first port P1 and the third port P3 communicate with each other and the second port P2 and the fourth port P4 communicate with each other. In the first mode, the refrigerant discharged from the compressor 15 flows to the outdoor heat exchanger 16, and in the second mode, the refrigerant discharged from the compressor 15 flows to the indoor heat exchanger 21.

The outdoor fan 19 is disposed near the outdoor heat exchanger 16. The outdoor fan 19 is rotationally driven by a motor and blows air to the outdoor heat exchanger 16. The refrigerant flowing inside the outdoor heat exchanger 16 exchanges heat with outdoor air sent by the outdoor fan 19, and evaporates or condenses.

The indoor fan 22 is disposed near the indoor heat exchanger 21. The indoor fan 22 is rotationally driven by a motor and blows air to the indoor heat exchanger 21. The refrigerant flowing inside the indoor heat exchanger 21 exchanges heat with indoor air sent by the indoor fan 22, and condenses or evaporates.

When executing a cooling operation, the air conditioner 10 switches the four-way switching valve 18 to the first mode, and when executing a heating operation, the air conditioner 10 switches the four-way switching valve 18 to the second mode. In the cooling operation, a gas refrigerant discharged from the compressor 15 flows through the four-way switching valve 18 into the outdoor heat exchanger 16 functioning as a condenser, and is condensed into a liquid refrigerant. This liquid refrigerant is decompressed by the expansion valve 17 to become a gas-liquid two-phase refrigerant, and flows into the indoor heat exchanger 21 functioning as an evaporator. The gas-liquid two-phase refrigerant exchanges heat with the air sent by the indoor fan 22 and is evaporated into a gas refrigerant. The air cooled by the heat exchange is supplied into the room. The gas refrigerant flowing out of the indoor heat exchanger 21 is sucked into the compressor 15 through the four-way switching valve 18.

In the heating operation, the gas refrigerant discharged from the compressor 15 flows through the four-way switching valve 18 into the indoor heat exchanger 21 functioning as a condenser. The gas refrigerant exchanges heat with the air sent by the indoor fan 22 and is condensed into a liquid refrigerant. The air heated by the heat exchange is supplied into the room. The liquid refrigerant flowing out of the indoor heat exchanger 21 is decompressed by the expansion valve 17 to become a gas-liquid two-phase refrigerant, and flows into the outdoor heat exchanger 16 functioning as an evaporator. The gas-liquid two-phase refrigerant is evaporated into a gas refrigerant in the outdoor heat exchanger 16. The gas refrigerant is sucked into the compressor 15 through the four-way switching valve 18.

### (Configuration of flow path switching valve)

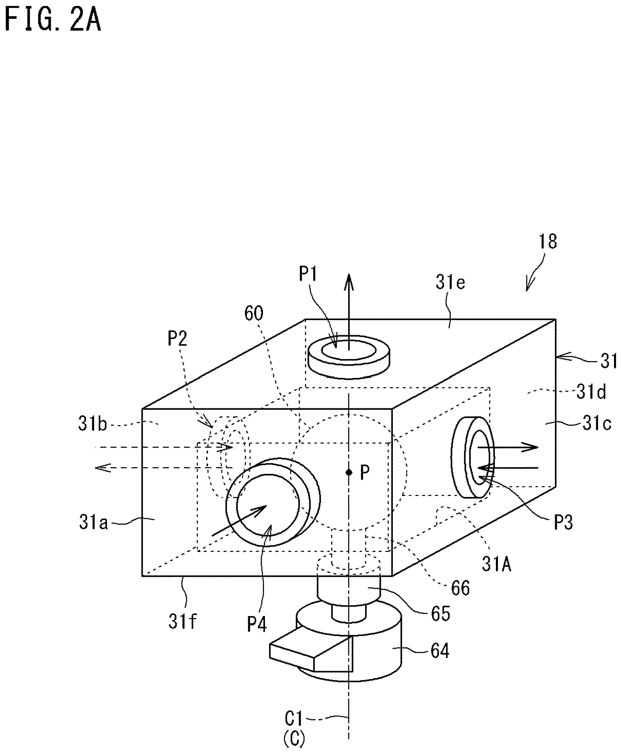

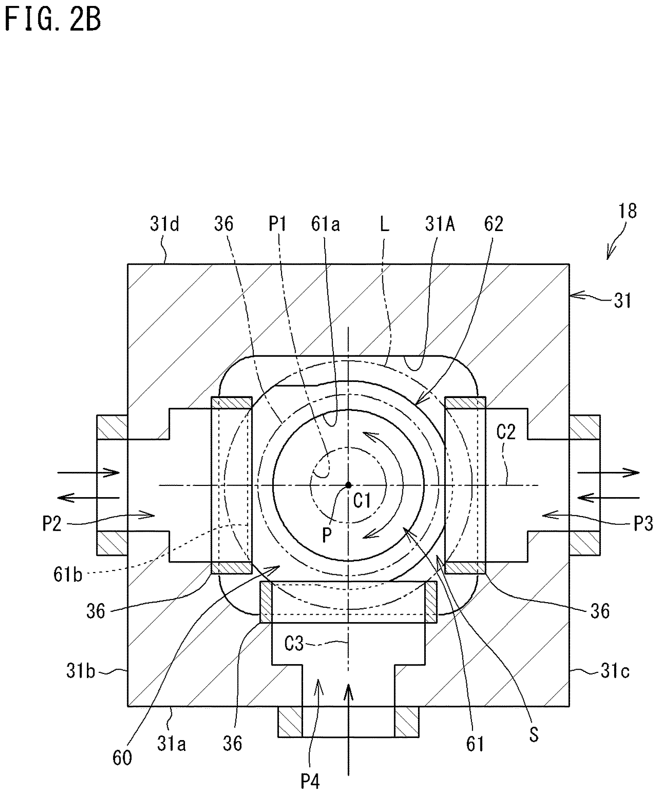

FIG. 2A is a perspective view of the flow path switching valve. FIG. 2B is a sectional view of the flow path switching valve.

The four-way switching valve 18 which is a flow path switching valve includes a casing 31.

The casing 31 forms an outer contour of the four-way switching valve 18 and houses the valve body 60 therein. The casing 31 has a substantially rectangular parallelepiped shape. The casing 31 has four side surfaces 31a, 31b, 31c, and 31d, an upper surface 31e, and a lower surface 31f. The casing 31 has a hollow portion 31A inside. The hollow portion 31A has a substantially rectangular parallelepiped shape.

The casing 31 includes, for example, a material containing aluminum as a main component, such as aluminum alloy or pure aluminum, for example. The casing 31 is formed by, for example, casting such as aluminum die casting. The material of the casing 31 is not limited to the above material, and may be another material such as stainless steel, iron, or copper. A method of manufacturing the casing 31 is also not limited.

The ports P1 to P4 are formed on the upper surface 31e of the casing 31 and the three side surfaces 31a, 31b, and 31c, respectively. Specifically, the first port P1 is formed on the upper surface 31e of the casing 31. The fourth port P4 is formed on one side surface 31a of the casing 31. Of the other two side surfaces 31b and 31c adjacent to both sides of the side surface 31a, the second port P2 is formed on one side surface 31b, and the third port P3 is formed on the other side surface 31c. The first to fourth ports P1 to P4 are holes (flow paths) penetrating the casing 31 between the upper surface 31e and the side surfaces 31a to 31c and the hollow portion 31A. The first to fourth ports P1 to P4 correspond to the first to fourth ports P1 to P4 described with reference to FIG. 1.

The four-way switching valve 18 includes the valve body 60. The valve body 60 is disposed in the hollow portion 31A of the casing 31. The valve body 60 has a spherical shape. As illustrated in FIG. 2B, a gasket 36 is provided between each of the ports P1 to P4 of the casing 31 and the valve body 60. The gasket 36 has an annular shape. The gasket 36 is in contact with the outer surface (spherical surface) of the valve body 60.

The gasket 36 is formed of a material having an elastic coefficient smaller an elastic coefficient of the casing 31. The gasket 36 is an elastic member formed of a synthetic resin such as polyether ether ketone (PEEK) or polytetrafluoroethylene (PTFE). Therefore, the gasket 36 elastically contacts the outer surface of the valve body 60. The gasket 36 has a function of suppressing leakage of the refrigerant from the refrigerant flow path and a function of supporting the valve body 60 in the hollow portion 31A.

As shown in FIG. 2A, the valve body 60 rotates about a predetermined axial center C. The axial center C of the valve body 60 passes through a center P of the spherical shape of the valve body 60. A drive shaft 66 is disposed on the axial center C. The drive shaft 66 is provided in a lower part of the casing 31. The drive shaft 66 has an axial center in a vertical direction. The drive shaft 66 penetrates the casing 31 between the lower surface 31f and the hollow portion 31A of the casing 31. In the hollow portion 31A, an end of the drive shaft 66 is fixed to the valve body 60. A drive unit 64 and a decelerator 65 are connected to the drive shaft 66 outside the casing 31.

The drive unit 64 is an electric motor. The drive unit 64 generates and outputs rotational power. The decelerator 65 decelerates the rotational power output from the drive unit 64 and transmits the rotational power to the drive shaft 66. The decelerator 65 includes a deceleration gear that reduces the rotational power of the drive unit 64. The drive unit 64, the decelerator 65, and the drive shaft 66 constitute a drive device that drives the valve body 60. The decelerator 65 decelerates the rotational power of the drive unit 64 and transmits the rotational power to the drive shaft 66 and the valve body 60 to increase an output torque to the valve body 60. Therefore, the output of the drive unit 64 for rotating the valve body 60 can be reduced, and the drive unit 64 can be downsized.

### (Specific configuration of valve body)

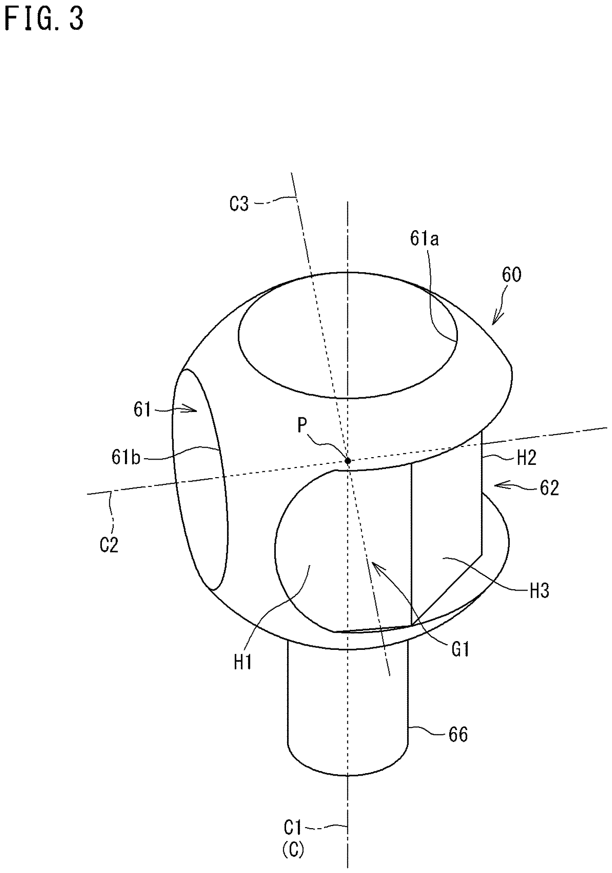

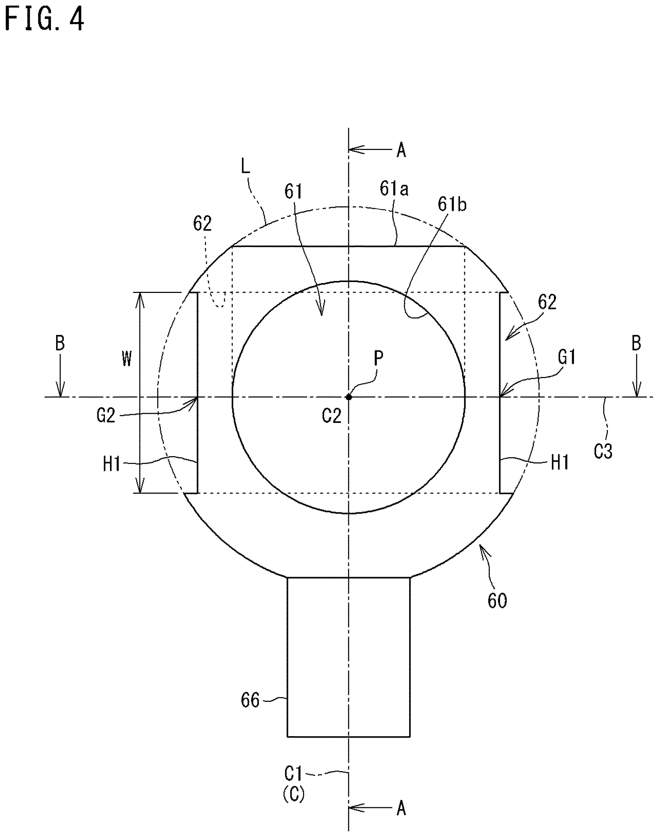

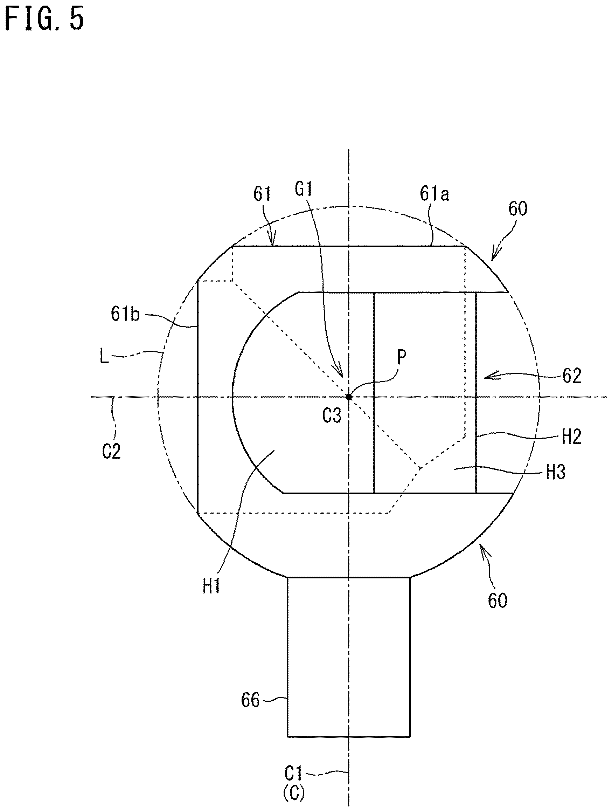

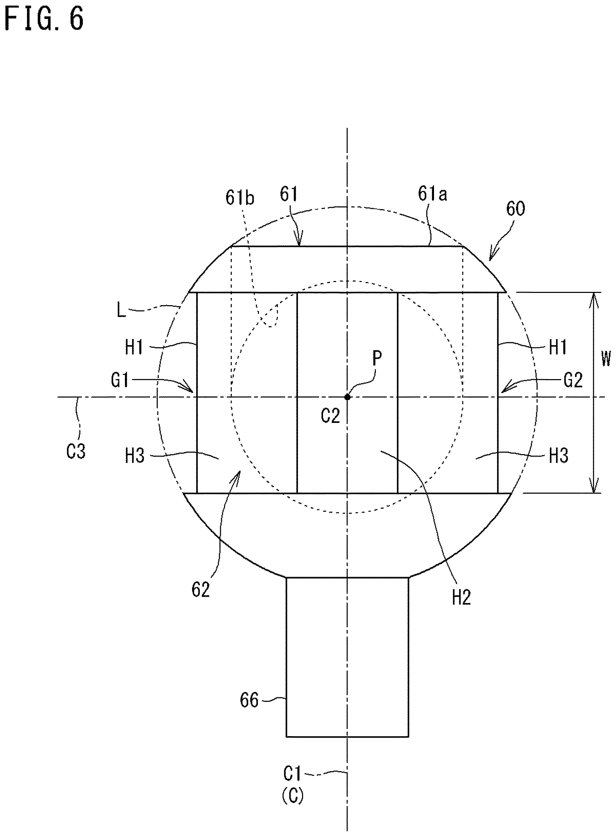

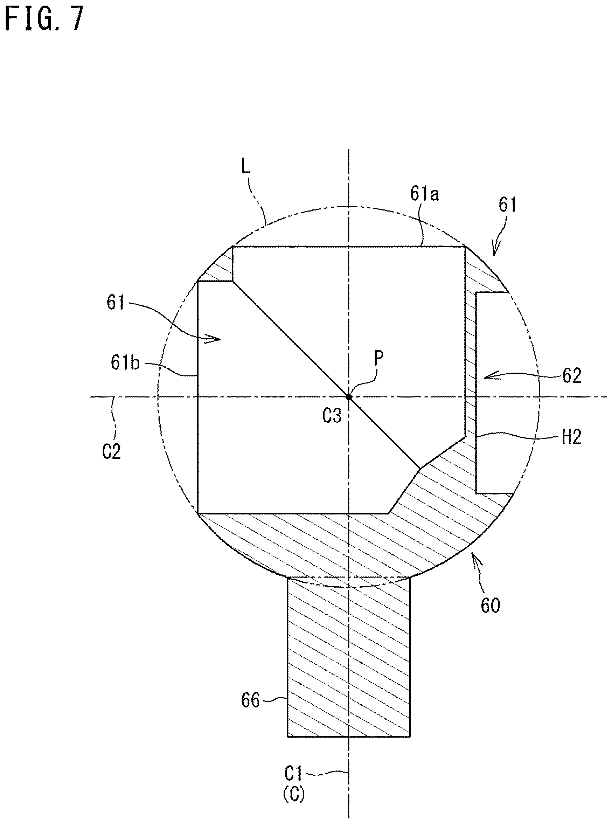

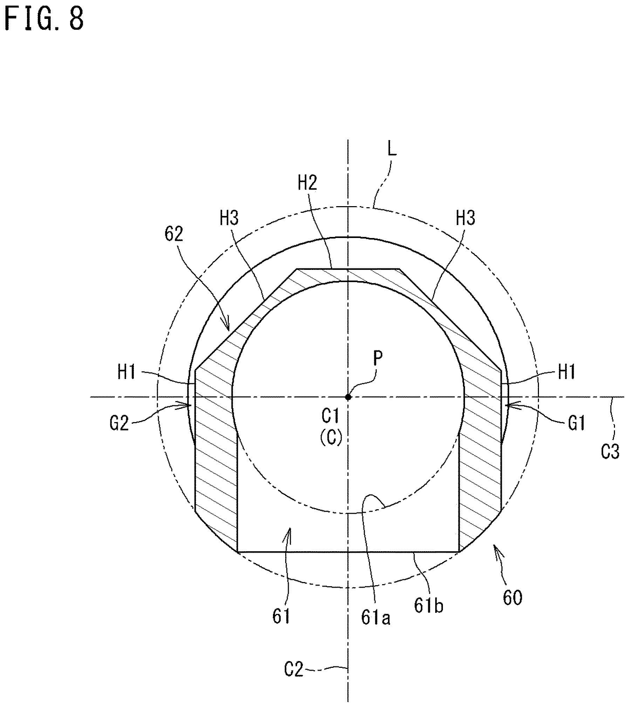

FIG. 3 is a perspective view of the valve body of the flow path switching valve. FIG. 4 is a front view of the valve body of the flow path switching valve. FIG. 5 is a side view of the valve body of the flow path switching valve. FIG. 6 is a rear view of the valve body of the flow path switching valve. FIG. 7 is a sectional view taken along line A-A in FIG. 4. FIG. 8 is a sectional view taken along line B-B in FIG. 4. Each drawing shows a first axial center C1 coinciding with the axial center C of the valve body 60, a second axial center C2 orthogonal to the first axial center C1, and a third axial center C3 orthogonal to the first axial center C1 and the second axial center C2. The first to third axial centers C1 to C3 intersect at the center P of the spherical shape of the valve body 60.

A through hole 61 and a concave portion 62 are formed in the valve body 60. The through hole 61 and the concave portion 62 both constitute a refrigerant flow path. The through hole 61 is a hole penetrating the valve body 60. On the other hand, the concave portion 62 has a shape in which the outer surface of the valve body 60 is recessed.

The through hole 61 opens at two positions on the outer surface of the valve body 60. One opening 61a of the through hole 61 is formed on the first axial center C1. Specifically, the one opening 61a is formed on the outer surface of the valve body 60 on the first axial center C1 on an opposite side of the drive shaft 66. The other opening 61b is formed on the second axial center C2. Therefore, as shown in FIG. 7, the through hole 61 has a shape bent in a substantially L shape. The areas of both the openings 61a and 61b are the same. A sectional area of the through hole 61 (an area of a cross section orthogonal to a center line of the through hole 61; a cross-sectional area) is substantially the same as the area of each of the openings 61a and 61b. Specifically, the sectional area of the through hole 61 is equal to or slightly larger or smaller than the area of each of the openings 61a and 61b.

As shown in FIG. 6 and FIG. 8, the concave portion 62 is formed in a range (range of 180° about the first axial center C1) extending between a first position G1 located on the third axial center C3 and a second position G2 located on an opposite side of the first position G1 on the third axial center C3 on the outer surface of the valve body 60. The concave portion 62 has a width w (see FIG. 6) in a direction along the first axial center C1 slightly smaller than diameters of the openings 61a and 61b of the through hole 61.

A bottom surface of the concave portion 62 according to the present embodiment is configured by a plurality of planes H1, H2, and H3. Specifically, the bottom surface of the concave portion 62 includes two first planes H1 located on the third axial center C3, one second plane H2 located on the second axial center C2, and two third planes H3 located between the first plane H1 and the second plane H2. The first plane H1 is substantially orthogonal to the third axial center C3. The second plane H2 is substantially orthogonal to the second axial center C2. The third plane H3 is inclined with respect to the second and third axial centers C2 and C3. The bottom surface of the concave portion 62 may be formed by a plurality of (four or less or six or more) planes. The bottom surface of the concave portion 62 is not required to be formed by a plurality of planes, and may be a curved surface curved about the first axial center C1.

The valve body 60 is not a complete sphere due to the formation of the through hole 61 and the concave portion 62, and is a sphere in which a part of the spherical surface is missing.

In FIG. 4 to FIG. 8, the shape of a complete sphere without a missing part is indicated by an imaginary line L.

As shown in FIG. 2B, the one opening 61a of the through hole 61 always communicates with the first port P1. The other opening 61b of the through hole 61 selectively communicates with one of the second port P2 or the third port P3 when the valve body 60 rotates 180° about the first axial center C1. Therefore, the through hole 61 forms a refrigerant flow path from the second port P2 to the first port P1 as indicated by a solid arrow in FIG. 1 and a refrigerant flow path from the third port P3 to the first port P1 as indicated by a dotted arrow in FIG. 1. These refrigerant flow paths are flow paths through which a "low-pressure refrigerant" sucked into the compressor 15 flows.

As shown in FIG. 2B, the gasket 36 provided between the first, second, and third ports P1, P2, and P3 and the valve body 60 is in close contact with the outer surface of the valve body 60 over an entire periphery around each of the openings 61a and 61b of the through hole 61. Therefore, the gasket 36 suppresses leakage of the low-pressure refrigerant flowing between the first, second, and third ports P1, P2, and P3 and the through hole 61 of the valve body 60 to the hollow portion 31A.

The concave portion 62 formed in the valve body 60 always communicates with the fourth port P4. The concave portion 62 selectively communicates with one of the second port P2 or the third port P3 when the valve body 60 rotates 180° about the first axial center C1. Therefore, the concave portion 62 forms a refrigerant flow path from the fourth port P4 to the third port P3 as indicated by a solid arrow in FIG. 1 and a refrigerant flow path from the fourth port P4 to the second port P2 as indicated by a dotted arrow in FIG. 1. These refrigerant flow paths are flow paths through which a "high-pressure refrigerant" discharged from the compressor 15 flows.

As shown in FIG. 2B, the gasket 36 provided between the second, third, and fourth ports P2, P3, and P4 and the valve body 60 is in close contact with the outer surface of the valve body 60 around the concave portion 62. However, since the concave portion 62 is continuously formed between the fourth port P4 and the second port P2 or the third port P3 on the outer surface of the valve body 60, the gasket 36 cannot contact the entire periphery of the concave portion 62. Therefore, a gap S is generated between the gasket 36 and the outer surface of the valve body 60. When the high-pressure refrigerant enters the concave portion 62 from the fourth port P4, the high-pressure refrigerant leaks from the gap S into the hollow portion 31A before reaching the second port P2 or the third port P3. When the high-pressure refrigerant leaks into the hollow portion 31A in this manner, a pressure of the high-pressure refrigerant is uniformly applied to the entire outer surface of the valve body 60 in the hollow portion 31A. Therefore, it is possible to suppress a load torque for rotating the valve body 60 from becoming excessive by the outer surface of the valve body 60 locally coming into firm contact with a part of the gasket 36. Thus, the drive unit 64 having a small output can be adopted.

### (Switching of flow path by valve body 60)

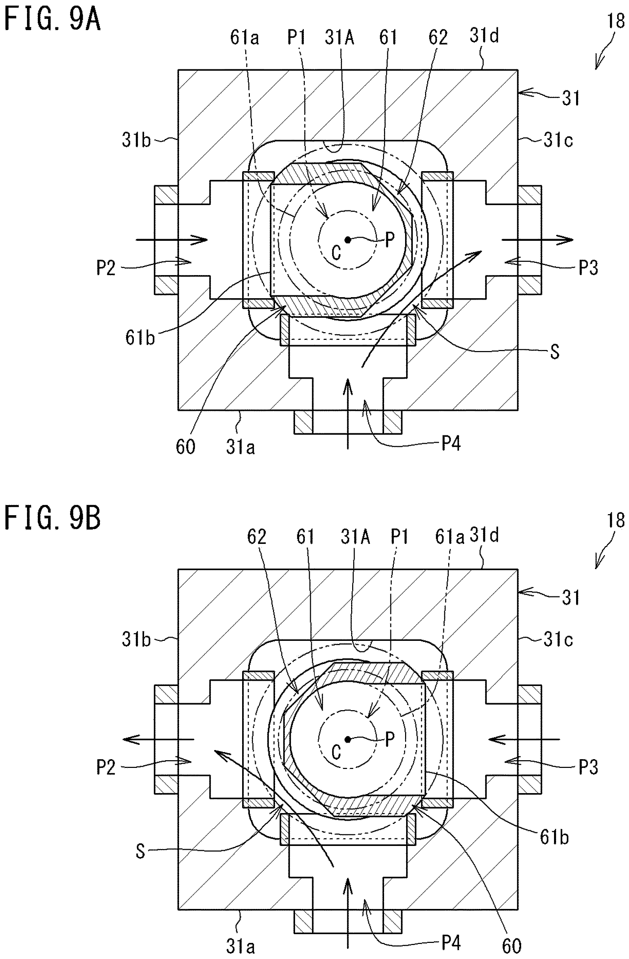

FIG. 9A and FIG. 9B are diagrams for describing an action of the flow path switching valve.

The valve body 60 is switched between a first orientation (see FIG. 9A) and a second orientation (see FIG. 9B) by rotating 180 degrees about the first axial center C1.

In the first orientation shown in FIG. 9A, the first port P1 and the second port P2 are connected by the through hole 61 of the valve body 60, and the fourth port P4 and the third port P3 are connected by the concave portion 62. Therefore, as indicated by solid arrows in FIG. 1, the refrigerant discharged from the compressor 15 flows into the four-way switching valve 18 from the fourth port P4, flows out of the four-way switching valve 18 from the third port P3, and is supplied to the outdoor heat exchanger 16. The refrigerant flowing out of the indoor heat exchanger 21 flows into the four-way switching valve 18 from the second port P2, flows out of the four-way switching valve 18 from the first port P1, and is sucked into the compressor 15. Thus, the air conditioner 10 can execute the cooling operation.

In the second orientation shown in FIG. 9B, the first port P1 and the third port P3 are connected by the through hole 61 of the valve body 60, and the fourth port P4 and the second port P2 are connected by the concave portion 62. Therefore, as indicated by dotted arrows in FIG. 1, the refrigerant discharged from the compressor 15 flows into the four-way switching valve 18 from the fourth port P4, flows out of the four-way switching valve 18 from the second port P2, and is supplied to the indoor heat exchanger 21. The refrigerant flowing out of the outdoor heat exchanger 16 flows into the four-way switching valve 18 from the third port P3, flows out of the four-way switching valve 18 from the first port P1, and is sucked into the compressor 15. Thus, the air conditioner 10 can execute the heating operation.

In the refrigeration apparatus, the high-pressure refrigerant discharged from the compressor 15 and the low-pressure refrigerant sucked into the compressor 15 have different densities. Specifically, the low-pressure refrigerant has a density lower than the density of the high-pressure refrigerant. Therefore, the low-pressure refrigerant is more likely to cause a pressure loss while flowing through the refrigerant flow path than the high-pressure refrigerant. In order to suppress such a pressure loss, it is preferable to increase a sectional area of the refrigerant flow path through which the low-pressure refrigerant flows (an area of the cross section orthogonal to the flow of the refrigerant; a cross-sectional area).

As described in Patent Literature 1, when a plurality of through holes is formed in the valve body, even if an attempt is made to increase the sectional area of the through hole through which the low-pressure refrigerant flows, the sectional area cannot be made so large due to the presence of other through holes. On the other hand, the valve body 60 according to the present embodiment is provided with the through hole 61 and the concave portion 62, the through hole 61 serves as a flow path of the low-pressure refrigerant, and the concave portion 62 serves as a flow path of the high-pressure refrigerant. Since the concave portion 62 has a shape obtained by recessing the outer surface of the valve body 60 and is opened to the outside, the concave portion 62 can be formed at a position closer to the outer surface of the valve body 60. Therefore, a remainder of the valve body 60 other than the concave portion 62 can be made larger, and the through hole (low-pressure refrigerant flow path) 61 having a larger sectional area can be formed by utilizing the remainder.

In order to increase the sectional area of the through hole 61 in the valve body 60, it is also conceivable to increase an outer diameter of the valve body 60 itself. However, adopting such a means leads to an increase in size of the four-way switching valve 18. Furthermore, when such a means is adopted, a contact area of the gasket 36 with the valve body 60 increases, the load torque for rotating the valve body 60 by frictional resistance increases, and it is necessary to increase the output of the drive unit 64.

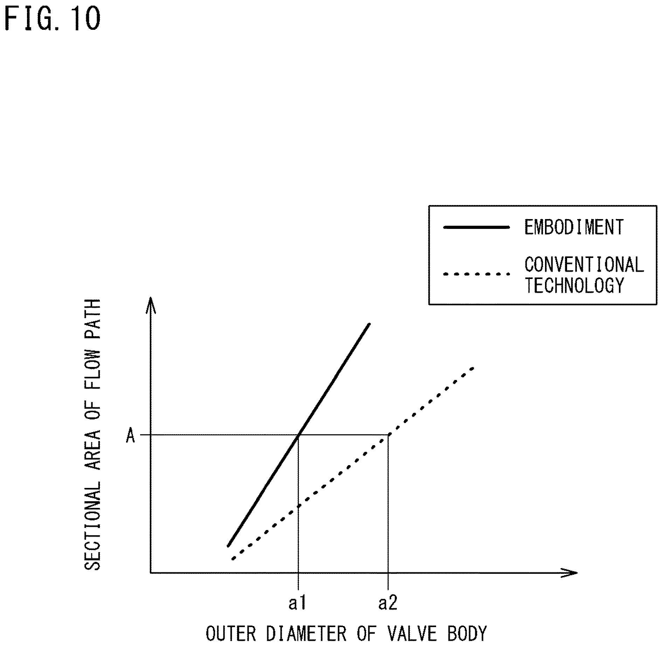

FIG. 10 is a schematic graph showing a relationship between the outer diameter of the valve body of the flow path switching valve and the sectional area of the flow path of the low-pressure refrigerant that can be formed in the valve body. A solid line in FIG. 10 indicates a graph of the present embodiment in which the through hole 61 and the concave portion 62 are formed in the valve body 60 as a refrigerant flow path, and a dotted line in FIG. 10 indicates a graph of a conventional technique (for example, Patent Literature 1) in which two through holes are formed in the valve body as refrigerant flow paths. In FIG. 10, when the sectional area of the flow path of the low-pressure refrigerant is a value A, the outer diameter of the valve body needs to be a2 in the conventional technique, but in the present embodiment, the outer diameter of the valve body 60 can be a1 which is smaller than a2. In other words, in the present embodiment, the through hole 61 having a larger sectional area can be formed by using the valve body 60 having a smaller outer diameter than in the conventional technique. Therefore, the four-way switching valve 18 according to the present embodiment can contribute to reduction in pressure loss of the low-pressure refrigerant, downsizing of the four-way switching valve 18, and reduction in output of the drive unit 64.

In the present embodiment, a capacity of the through hole 61 in the valve body 60 can be 28% or more and 69% or less of a volume of the valve body 60. In other words, by adopting the configuration of the present embodiment, the capacity of the through hole 61 can be increased to 69% of the volume of the valve body 60 at maximum. The capacity of the through hole 61 is preferably 50% or more, more preferably 60% or more of the volume of the valve body 60. In the present specification, the capacity of the through hole 61 is a capacity of a space surrounded by a tube surface (inner peripheral surface) of the valve body 60 forming the through hole 61. A capacity of the concave portion 62 is a capacity of a space surrounded by the bottom surface and the side surface forming the concave portion 62. The capacity of the valve body 60 is a substantial volume obtained by removing the capacity of the through hole 61 and the capacity of the concave portion 62 from the valve body 60.

### [Second embodiment]

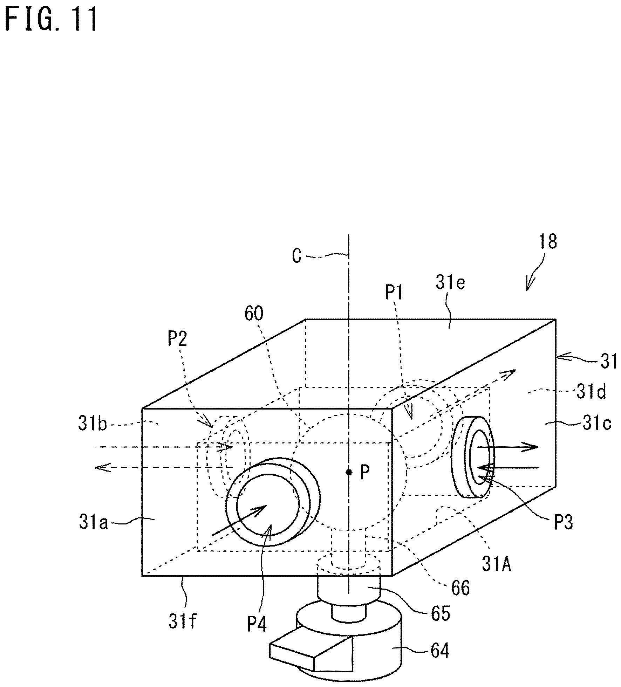

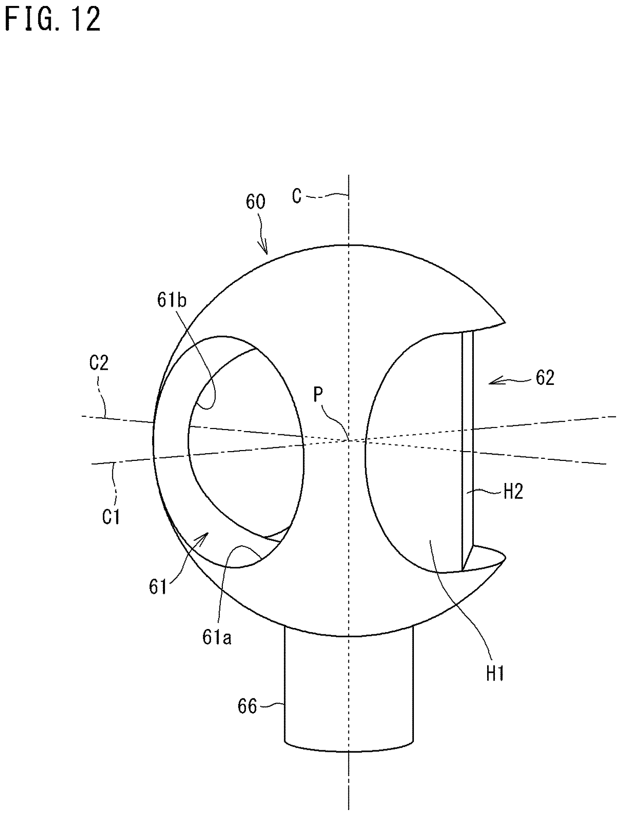

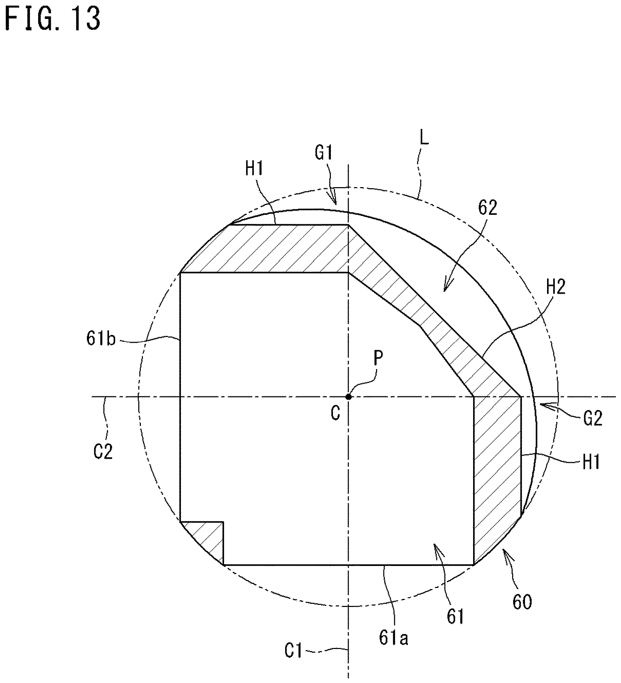

FIG. 11 is a perspective view of a flow path switching valve according to a second embodiment of the present disclosure. FIG. 12 is a perspective view of the valve body of the flow path switching valve. FIG. 13 is a perspective view of the valve body of the flow path switching valve. FIG. 12 and FIG. 13 show the axial center C of the valve body 60, the first axial center C1 orthogonal to the axial center C, and the second axial center C2 orthogonal to the axial center C and the first axial center C1. The axial center C, the first axial center C1, and the second axial center C2 intersect at the center P of the spherical shape of the valve body 60.

In the flow path switching valve 18 according to the present embodiment, the first port P1 is not formed on the upper surface 31e of the casing 31, and the first port P1 is formed on the side surface 31d of the casing 31. Therefore, in the present embodiment, the first to fourth ports P1 to P4 are all formed on the side surfaces 31a to 31d of the casing 31.

In the valve body 60 according to the present embodiment, the through hole 61 and the concave portion 62 are formed as in the first embodiment. The through hole 61 and the concave portion 62 both constitute a refrigerant flow path. The through hole 61 is a hole penetrating the valve body 60. On the other hand, the concave portion 62 has a shape in which the outer surface of the valve body 60 is recessed.

The through hole 61 opens at two positions on the outer surface of the valve body 60. One opening 61a of the through hole 61 is formed on the first axial center C1. The other opening 61b is formed on the second axial center C2. Therefore, as shown in FIG. 13, the through hole 61 has a shape bent in a substantially L shape.

The concave portion 62 is formed in a range (range of 90° around the axial center C) extending between the first position G1 disposed on an opposite side of one opening 61a of the through hole 61 on the first axial center C1 and the second position G2 disposed on an opposite side of the other opening 61b of the through hole 61 on the second axial center C2 on the outer surface of the valve body 60.

A bottom surface of the concave portion 62 according to the present embodiment is configured by a plurality of planes H1 and H2. Specifically, the bottom surface of the concave portion 62 includes two first planes H1 located on the first and second axial centers C1 and C2 and the second plane H2 located between the two first planes H1. One of the two first planes H1 is substantially orthogonal to the first axial center C1, and the other first plane H1 is substantially orthogonal to the second axial center C2. The two first planes H1 are substantially perpendicular to each other. The second plane H2 is inclined with respect to the first and second axial centers C1 and C2. The bottom surface of the concave portion 62 may be formed by a plurality of (four or more) planes. The bottom surface of the concave portion 62 is not required to be formed by a plurality of planes, and may be a curved surface curved about the first axial center C1.

The valve body 60 is not a complete sphere due to the formation of the through hole 61 and the concave portion 62, and is a sphere in which a part of the spherical surface is missing. In FIG. 13, the shape of a complete sphere without a missing part is indicated by an imaginary line L.

### (Switching of flow path by valve body 60)

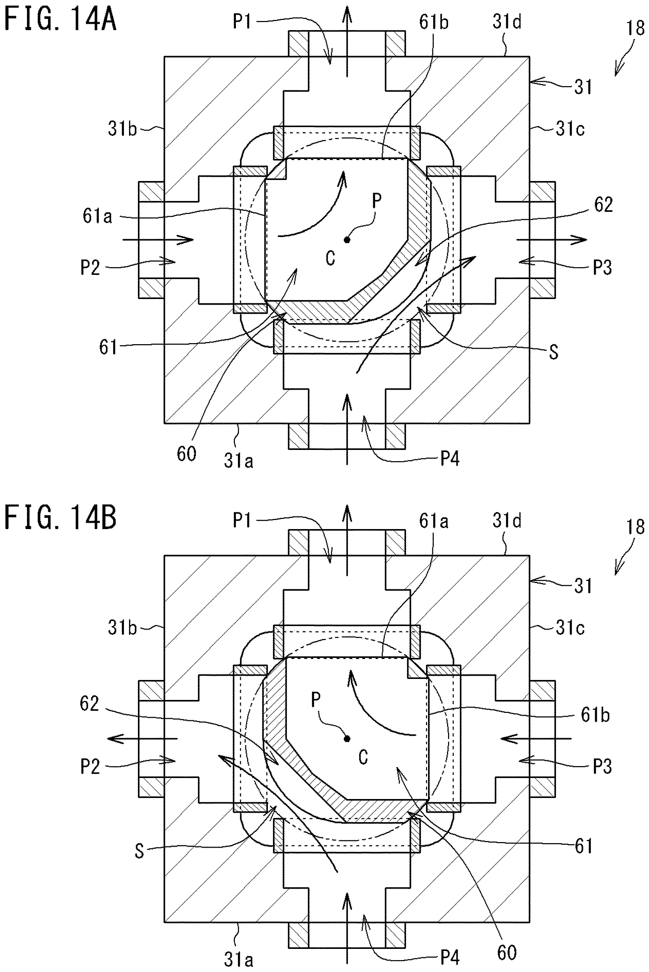

FIG. 14A and FIG. 14B are diagrams for describing an action of the flow path switching valve.

In the present embodiment, the valve body 60 is switched between a first orientation (see FIG. 14A) and a second orientation (see FIG. 14B) by rotating 90 degrees about the axial center C.

In the first orientation shown in FIG. 14A, the first port P1 (first opening) and the second port P2 (second opening) are connected by the through hole 61 of the valve body 60, and the fourth port P4 (fourth opening) and the third port P3 (third opening) are connected by the concave portion 62. Therefore, as indicated by solid arrows in FIG. 1, the refrigerant discharged from the compressor 15 flows into the four-way switching valve 18 from the fourth port P4, flows out of the four-way switching valve 18 from the third port P3, and is supplied to the outdoor heat exchanger 16. The refrigerant flowing out of the indoor heat exchanger 21 flows into the four-way switching valve 18 from the second port P2, flows out of the four-way switching valve 18 from the first port P1, and is sucked into the compressor 15. Thus, the air conditioner 10 can execute the cooling operation.

In the second orientation shown in FIG. 14B, the first port P1 and the third port P3 are connected by the through hole 61 of the valve body 60, and the fourth port P4 and the second port P2 are connected by the concave portion 62. Therefore, as indicated by dotted arrows in FIG. 1, the refrigerant discharged from the compressor 15 flows into the four-way switching valve 18 from the fourth port P4, flows out of the four-way switching valve 18 from the second port P2, and is supplied to the indoor heat exchanger 21. The refrigerant flowing out of the outdoor heat exchanger 16 flows into the four-way switching valve 18 from the third port P3, flows out of the four-way switching valve 18 from the first port P1, and is sucked into the compressor 15. Thus, the air conditioner 10 can execute the heating operation.

In the present embodiment, too, the refrigerant flowing into the concave portion 62 from the fourth port P4 leaks into the hollow portion 31A from the gap (leakage portion) S between the gasket 36 and the valve body 60. Therefore, the pressure of the high-pressure refrigerant is uniformly applied to the entire outer surface of the valve body 60, and the load torque for rotating the valve body 60 can be reduced.

In the present embodiment, since all of the first to fourth ports P1 to P4 are formed on the side surfaces 31a to 31d of the casing 31, the four-way switching valve 18 can be downsized in a direction of the axial center C as compared with the first embodiment.

### [Other embodiments]

In the above embodiment, the high-pressure refrigerant flowing through the fourth port P4 and the second port P2 or the third port P3 communicating with each other by the concave portion 62 leaks to the hollow portion 31A of the casing 31. However, the present disclosure is not limited to this configuration, and the high-pressure refrigerant may be configured not to leak into the hollow portion 31A.

In the above embodiment, the axial center C of the valve body 60 is disposed so as to face the vertical direction, but may face a direction other than the vertical direction, for example, a horizontal direction, or a direction inclined with respect to the vertical direction and the horizontal direction.

In the embodiment, the casing 31 of the flow path switching valve 18 has a substantially rectangular parallelepiped shape, but may have a cubic shape, a columnar shape, or the like. The hollow portion 31A of the casing 31 may also have a cubic shape, a cylindrical shape, or the like.

In the embodiment, the flow path switching valve 18 is a four-way switching valve, but may be a three-way switching valve. In this case, for example, the fourth port according to the above embodiment can be omitted. In the flow path switching valve 18, the second port P2 or the third port P3 may be closed. In this case, the valve also functions substantially as a three-way switching valve.

### [Action and effects of embodiments]

(1) The flow path switching valve 18 according to the present disclosure includes the container (casing) 31 having the hollow portion 31A therein, and the valve body 60 that is rotatably housed in the hollow portion 31A and is switched between the first orientation and the second orientation by being rotationally operated. The container 31 is provided with the first opening (first port) P1, the second opening (second port) P2, and the third opening (third port) P3 that communicate the hollow portion 31A with the outside of the container 31. The valve body 60 is provided with the through hole 61 that connects the first opening P1 and the second opening P2 in the first orientation, connects the first opening P1 and the third opening P3 in the second orientation, and through which the low-pressure refrigerant sucked into the compressor 15 of the refrigerant circuit 30 flows, and the concave portion 62 that communicates with the third opening P3 in the first orientation, communicates with the second opening P2 in the second orientation, and has a shape in which the outer surface of the valve body 60 is recessed. In this manner, in the valve body 60 according to the present embodiment, the through hole 61 and the concave portion 62 are formed instead of a plurality of through holes. Therefore, the capacity of the through hole 61 occupying the entire valve body 60 can be further increased, and the sectional area of the through hole 61 can be further increased. Thus, the pressure loss of the low-pressure refrigerant flowing through the through hole 61 can be reduced.
(2) In the flow path switching valve according to the embodiment, the container 31 is provided with the fourth opening (fourth port) P4 that communicates the hollow portion 31A with the outside of the container 31. The concave portion 62 connects the third opening P3 and the fourth opening P4 in the first orientation, and connects the second opening P2 and the fourth opening P4 in the second orientation, and thus, the high-pressure refrigerant discharged from the compressor 15 flows. Therefore, a high-pressure refrigerant can flow by utilizing the concave portion 62, and the flow path switching valve 18 can be used as a four-way switching valve.
(3) In the flow path switching valve 18 according to the embodiment, the capacity of the through hole 61 is 28% or more and 69% or less of the volume of the valve body 60. In the present embodiment, since the concave portion 62 through which the high-pressure refrigerant flows is formed on the outer surface of the valve body 60, the capacity of the through hole 61 through which the low-pressure refrigerant flows can be increased to 69% of the volume of the valve body 60. Therefore, the sectional area of the flow path of the low-pressure refrigerant due to the through hole 61 can be increased, and the pressure loss can be suppressed.
(4) The flow path switching valve 18 according to the first embodiment further includes the leakage portion (gap) S that leaks the high-pressure refrigerant flowing in from the fourth opening P4 to the hollow portion 31A. Therefore, the pressure of the leaking high-pressure refrigerant can be substantially uniformly applied to the entire outer surface of the valve body 60, and the load torque for rotating the valve body 60 can be reduced.
(5) In the flow path switching valve 18 of the first embodiment, as shown in FIG. 3 to FIG. 7, on the outer surface of the valve body 60, one end of the through hole 61 opens on the first axial center C1 that is the axial center C of the valve body 60, and the other end of the through hole 61 opens on the second axial center C2 orthogonal to the first axial center C1. The concave portion 62 is formed in a range extending between the first position G1 disposed on the third axial center C3 orthogonal to the first axial center C1 and the second axial center C2 and the second position G2 disposed on an opposite side of the first position G1 on the third axial center C3 on the outer surface of the valve body 60. In such a configuration, the through hole 61 through which the low-pressure refrigerant flows and the concave portion 62 through which the high-pressure refrigerant flows can be appropriately formed in the valve body 60.
(6) In the flow path switching valve 18 of the second embodiment, as illustrated in FIG. 12 and FIG. 13, on the outer surface of the valve body 60, one end of the through hole 61 opens on a first axial center C1 orthogonal to the axial center C of the valve body 60, and the other end of the through hole 61 opens on a second axial center C2 orthogonal to the axial center C and the first axial center C1. The concave portion 62 is formed in a range extending between the first position G1 disposed on an opposite side of one end of the through hole 61 on the first axial center C1 and the second position G2 disposed on an opposite side of the other end of the through hole 61 on the second axial center C2 on the outer surface of the valve body 60. In such a configuration, the through hole 61 through which the low-pressure refrigerant flows and the concave portion 62 through which the high-pressure refrigerant flows can be appropriately formed in the valve body 60.

The embodiments have been described above. Various modifications to modes and details will be available without departing from the gist and the scope of the claims.

### REFERENCE SIGNS LIST

- 10: refrigeration cycle apparatus
- 15: compressor
- 18: four-way switching valve (flow path switching valve)
- 30: refrigerant circuit
- 31: container (casing)
- 31A: hollow portion
- 60: valve body
- 61: through hole
- 62: concave portion
- C: axial center
- C1: first axial center
- C2: second axial center
- C3: third axial center
- G1: first position
- G2: second position
- P1: first port (first opening)
- P2: second port (second opening)
- P3: third port (third opening)
- P4: fourth port (fourth opening)
- S: gap (leakage portion)

## Claims

1. A flow path switching valve comprising:
a container (31) having a hollow portion (31A) inside; and
a valve body (60) that is rotatably housed in the hollow portion (31A) and is switched between a first orientation and a second orientation by being rotationally operated,
wherein the container (31) is provided with a first opening (P1), a second opening (P2), and a third opening (P3) that communicate the hollow portion (31A) with an outside of the container (31), and
the valve body (60) is provided with
a through hole (61) that connects the first opening (P1) and the second opening (P2) in the first orientation, connects the first opening (P1) and the third opening (P3) in the second orientation, and through which a low-pressure refrigerant sucked into a compressor (15) of a refrigerant circuit (30) flows, and
a concave portion (62) that communicates with the third opening (P3) in the first orientation, communicates with the second opening (P2) in the second orientation, and has a shape in which an outer surface of the valve body (60) is recessed.

2. The flow path switching valve according to claim 1, wherein
the container (31) is provided with a fourth opening (P4) that communicates the hollow portion (31A) and the outside of the container (31), and
the concave portion (62) connects the third opening (P3) and the fourth opening (P4) in the first orientation and connects the second opening (P2) and the fourth opening (P4) in the second orientation, and a high-pressure refrigerant discharged from the compressor (15) flows through the concave portion (62).

3. The flow path switching valve according to claim 1 or 2, wherein a capacity of the through hole (61) is 28% or more and 69% or less of a volume of the valve body (60).

4. The flow path switching valve according to claim 2, further comprising a leakage portion (S) that leaks the high-pressure refrigerant flowing in from the fourth opening (P4) to the hollow portion (31A).

5. The flow path switching valve according to any one of claims 1 to 4, wherein
on the outer surface of the valve body (60), one end of the through hole (61) is opened on a first axial center (C1) that is an axial center (C) of the valve body (60), and another end of the through hole (61) is opened on a second axial center (C2) orthogonal to the first axial center (C1), and
on the outer surface of the valve body (60), the concave portion (62) is provided in a range extending between a first position (G1) disposed on a third axial center (C3) orthogonal to the first axial center (C1) and the second axial center (C2) and a second position (G2) disposed on an opposite side of the first position (G1) on the third axial center (C3).

6. The flow path switching valve according to any one of claims 1 to 4, wherein
on the outer surface of the valve body (60), one end of the through hole (61) is opened on a first axial center (C1) orthogonal to an axial center (C) of the valve body (60), and another end of the through hole (61) is opened on a second axial center (C2) orthogonal to the axial center (C) and the first axial center (C), and
on the outer surface of the valve body (60), the concave portion (62) is provided in a range from a first position (G1) disposed on an opposite side of the one end of the through hole (61) on the first axial center (C1) to a second position (G2) disposed on an opposite side of the another end of the through hole (61) on the second axial center (C2).

7. A refrigeration cycle apparatus comprising the flow path switching valve (18) according to any one of claims 1 to 6.
